# EUROPEAN PATENT SPECIFICATION

(11) **EP 2 566 082 B1**
(45) Date of publication and mention of the grant of the patent: **14.02.2018**
(21) Application number: 11290389.3
(22) Date of filing: 02.09.2011
(51) Int. Cl.: H04J 14/02, H04B 10/69, H04B 10/516

(54) **Method for transmitting a signal in a wavelength division multiplexing optical network**
Verfahren zur Übertragung eines Signals in einem optischen Wellenlängenmultiplexnetzwerk
Procédé pour la transmission d'un signal dans un réseau optique à multiplexage en longueur d'onde

(43) Date of publication of application: 06.03.2013
(73) Proprietor: ALCATEL LUCENT, 92100 Boulogne-Billancourt (FR)
(72) Inventor: Dorize, Christian, 75007 Paris (FR); Renaudier, Jérémie, 75007 Paris (FR); Bertran-Pardo, Oriol, 75007 Paris (FR)
(74) Representative: Berthier, Karine

(56) References cited:
- US-A1- 2004 146 297
- US-A1- 2011 176 815
- MASAHIKO JINNO ET AL: "Distance-adaptive spectrum resource allocation in spectrum-sliced elastic optical path network [Topics in Optical Communications]", IEEE COMMUNICATIONS MAGAZINE, IEEE SERVICE CENTER, PISCATAWAY, US, vol. 48, no. 8, 1 August 2010 (2010-08-01) , pages 138-145, XP011316007, ISSN: 0163-6804
- CHRISTODOULOPOULOS K ET AL: "Elastic Bandwidth Allocation in Flexible OFDM-Based Optical Networks", JOURNAL OF LIGHTWAVE TECHNOLOGY, IEEE SERVICE CENTER, NEW YORK, NY, US, vol. 29, no. 9, 1 May 2011 (2011-05-01), pages 1354-1366, XP011353989, ISSN: 0733-8724, DOI: 10.1109/JLT.2011.2125777
- MASAHIKO JINNO ET AL: "Spectrum-efficient and scalable elastic optical path network: architecture, benefits, and enabling technologies", IEEE COMMUNICATIONS MAGAZINE, IEEE SERVICE CENTER, PISCATAWAY, US, vol. 47, no. 11, 1 November 2009 (2009-11-01), pages 66-73, XP011279184, ISSN: 0163-6804, DOI: 10.1109/MCOM.2009.5307468

## Description

### BACKGROUND OF THE INVENTION

The present invention relates to the field of optical transmissions and in particular of the multi-rate transmissions using wavelength division multiplexing (WDM) channels wherein the data rate from one channel to another may be different according to the needs for the transmission.
Furthermore, in order to cope with the traffic increase and to improve transmission capacity within a given optical fiber, two strategies may be applied, on one side to increase the data rate per channel using a higher order modulation format and on the other side to move the channels closer to each other and therefore increase the number of channels.
However, the said parameters are limited for technical reasons. Indeed, higher baud rates used to increase the data rate along with higher order modulation formats require a higher spectral occupancy or spectral width while the proximity of the adjacent channels leads to cross-talk and non linear effects due to the overlapping of the signals transmitted on the adjacent channels.

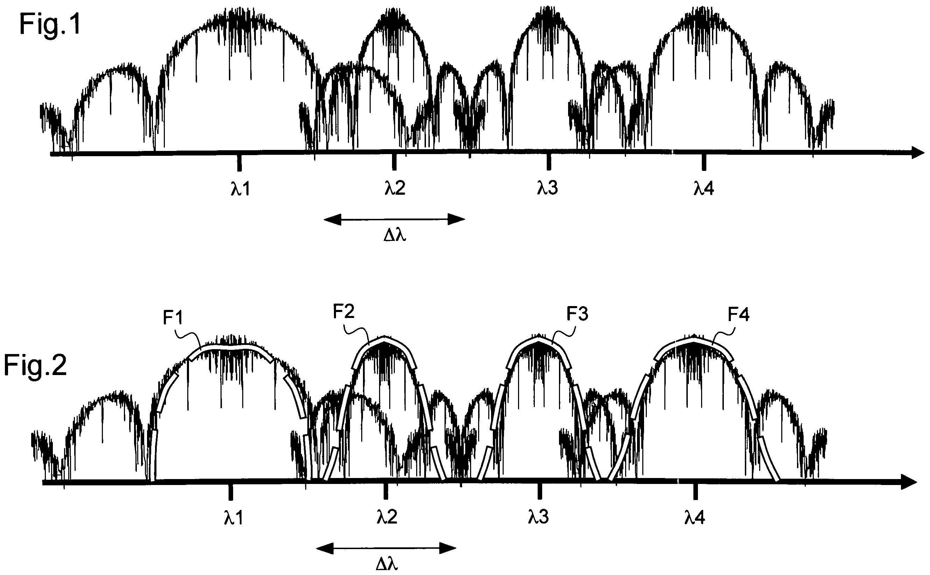

Fig.1 represents an example of a spectral representation of 4 optical signals with different rates distributed on four adjacent channels noted λ₁, λ₂, λ₃, λ₄ separated by a fixed channel spacing Δλ. The signal transmitted on λ₁ is for example a 100 Gb/s QPSK having a spectral spreading of 200% with respect to Δλ, the signals transmitted on λ₁ and λ₂ are for example 10 Gb/s DPSK having a spectral spreading of 100% with respect to Δλ and the signal transmitted on λ₄ is for example a 40 Gb/s DPSK having a spectral spreading of 160% with respect to Δλ. Thus, it is obvious that the use of modulation format having a spectral spreading higher than 100% with respect to Δλ induce overlapping with the adjacent channels as it is the case for example between the signals of channels λ₁ and λ₂ on one side and signals of channels λ₃ and λ₄ on the other side.
In order to reduce such overlapping between the adjacent channels, the solution of the state of the art refer to the use of optical return to zero carver that allow to reshape the modulation envelope and limit the spectral spreading.
However, such equipments add cost and complexity to the transmitters and lack of flexibility as the envelope shape cannot be adjusted. Document "Distance-adaptive spectrum resource allocation in spectrum-sliced elastic optical path network [Topics in Optical Communications]", by Masahiko Jinno et al, IEEE COMMUNICATIONS MAGAZINE, IEEE SERVICE CENTER, PISCATAWAY, US, vol. 48, no. 8, 1 August 2010 (2010-08-01), pages 138-145, ISSN: 0163-6804, discloses a distance-adaptive spectrum resource allocation wherein the spectral bandwidth assigned to a signal is determined by a filter shape that depends on the bandwidth of the signal.

Document "Elastic Bandwidth Allocation in Flexible OFDM-Based Optical Networks", by K. Christodoulopoulos et al, JOURNAL OF LIGHTWAVE TECHNOLOGY, IEEE SERVICE CENTER, NEW YORK, NY, US, vol. 29, no. 9, 1 May 2011 (2011-05-01), pages 1354-1366, ISSN: 0733-8724, DOI: 10.1109/JLT.2011.2125777, discloses bandwidth allocation in flexible OFDM-based optical networks where guard-bands are considered between adjacent optical paths.

Document US2011/0176815 A1 discloses a multi-channel optical trasnceiver where prefilter and post-filters for chromatic dispersion and pulse shape are considered.

### SUMMARY OF THE INVENTION

It is therefore an object of the present invention to provide a solution allowing to reduce the overlapping between adjacent channels which is flexible to be adapted to multi-rate networks without requiring complex equipments.

Thus, the present invention refers to a method for transmitting a signal along a path from a source node to a destination node on a channel in a wavelength division multiplexing network comprising a plurality of channels wherein the said method comprises the following steps:
- receiving a request for transmitting a signal from a source node to a destination node,
- selecting a path and a channel, along the said path, which is available for a transmission of the signal,
- selecting a modulation format for the transmission of the signal according to the received request,
- determining the spectral spreading of the at least one signal transmitted on the at least one channel adjacent to the selected channel along the said path according to the modulation format of the said at least one signal,
- determining a digital pulse shape filter to apply to the signal to be transmitted on the selected channel according to the selected modulation format and the determined spectral spreading of the at least one signal transmitted on the at least one adjacent channel.

According to another aspect of the present invention, the step of determination of a digital pulse shape filter comprises:
- determining the largest spectral spreading among the determined spectral spreadings,
- determining the available spectral width for the signal to be transmitted on the selected channel according to the largest determined spectral spreading,
- determining, among a set of predetermined digital pulse filters, a digital pulse shape filter adapted to the selected modulation format and having a spectral width being the closest to the determined available spectral width and smaller than the said determined available spectral width.

According to a further aspect of the present invention, the step of determination of a digital pulse shape filter comprises:
- determining the largest spectral spreading among the determined spectral spreadings on one hand on a first adjacent channel (for example the right one) and on the other hand on a second adjacent channel (which is the other adjacent channel, the left one in the present case),
- determining a first side available spectral width according to the largest spectral spreading determined on the first adjacent channel and a second side available spectral width according to largest spectral spreading determined on the second adjacent channel,
- determining, among a set of predetermined digital pulse filters comprising asymmetrical filters, a digital pulse shape filter adapted to the selected modulation format and having a spectral width being on one side, corresponding to the first side, the closest to the determined first side available spectral width and smaller than the said first side determined available spectral width and on the other side corresponding to the second side the closest to the determined second side available spectral width and smaller than the said second side determined available spectral width.

According to an additional aspect of the present invention, the wavelength division multiplexing channels are distributed on a spectral grid having a constant spectral spacing.

According to another aspect of the present invention, the wavelength division multiplexing channels are distributed on a spectral grid having a variable spectral spacing.

The embodiments of the present invention also refer to a control plane equipment of a wavelength division multiplexing network according to claim 6.

The embodiments of the present invention also refer to a transmitter of a wavelength division multiplexing network according to claim 7.

The embodiments of the present invention also refer to a receiver of a wavelength division multiplexing network according to claim 9.

The invention is solely defined and limited by the appended claims.

### BRIEF DESCRIPTION OF THE DRAWINGS

FIG**.1** is a diagram of spectral representation of four optical signals with different spectral envelopes distributed on four adjacent channels;
FIG**.2** is a diagram of spectral representation of four optical signals with different rates distributed on four adjacent channels and the application of four digital pulse filters according to the embodiments of the invention;
FIG.**3** is a diagram of a portion of an optical network comprising six nodes and eight inter-node links.
FIG.**4** is a chart representing the assignment of the channels on the links of the network portion represented in Fig.3 and the modulation format used in the said assigned channels.
FIG.**5** is a diagram of the structure of a control plane equipment, a transmitter of a source node ans a receiver of a destination node.
FIG**.6** is a diagram of spectral representation of three optical signals with different rates distributed on three adjacent channels and the application of an asymmetric digital pulse filter on the signal of the channel located in the middle;
FIG.7 is a diagram of a variable spectral grid;

### DETAILED DESCRIPTION OF THE INVENTION

As used herein, the term "WDM" refers to the acronym Wavelength Division Multiplexing;
As used herein, the term "Gb/s" refers to the Gigabit per second unit;
As used herein, the term "QPSK" refers to the acronym Quadrature Phase Shift Keying;
As used herein, the term "DPSK" refers to the acronym Differential Phase Shift Keying;
As used herein, the term "modulation format" refers to the modulation scheme, for example Quadrature Phase Shift Keying (QPSK), the number of polarisations used (1 or 2) and the baud rate (or, equivalently, the number of symbols per second), for example 10GBauds. These parameters yield the bit rate of the modulation, for example 40Gb/s;
As used herein, the term "adjacent channel or adjacent channels" refers to channels that are directly adjacent so that there is one (if the channel is located on a border of the spectrum) or two channels that are adjacent to a given channel (one on the left side of the spectrum and one on the right side of the spectrum)

The embodiments of the present invention refer to a method for transmitting a signal from a source node to a destination node on a channel of a wavelength division multiplexing (WDM) network comprising a plurality of channels wherein a digital pulse shape filter is applied on the signal to reduce or reshape its spectral spreading.

Fig.2 represents an example of application of 4 digital pulse shape filters noted F1, F2, F3 and F4 on the signals of the 4 channels described in figure 1 to limit their spectral spreading and therefore to reduce the overlapping between adjacent channels.

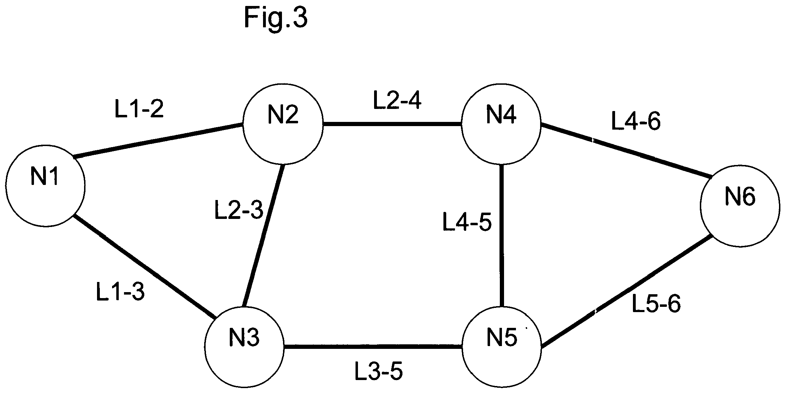

Fig.3 represents a diagram of a network portion comprising six nodes referenced Nᵢ with i=1...6 and optical links Lⱼ₋ₖ with j and k corresponding to the numbers i of the nodes connected by the said links. Furthermore, the network comprises 4 WDM channels noted λ₁ with l=1...4. In practice, the number of channels is obviously higher, for example 80 WDM channels.

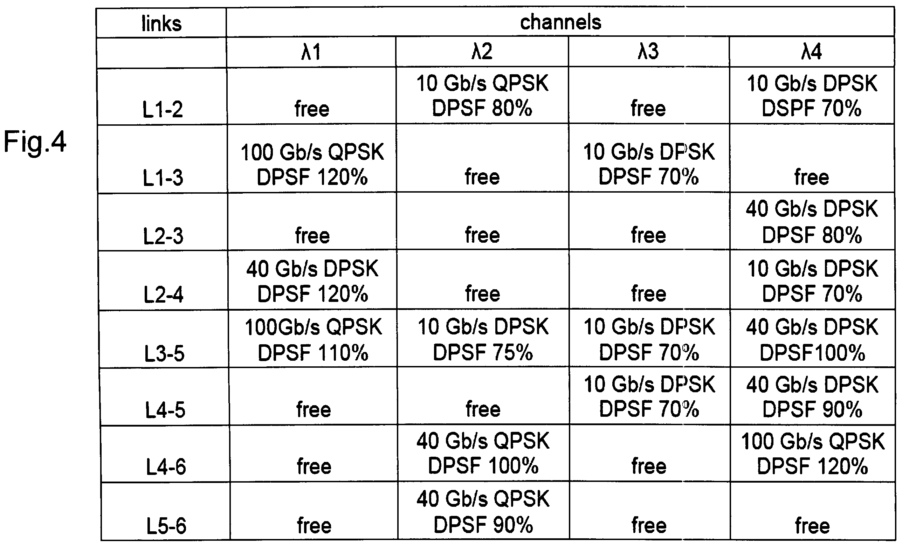

At a given time t1, the occupancy or assignment of the channels is as described in Fig.4. Fig.4 represents a chart with the channels of the network portion presented in Fig.3 as horizontal inputs and the links of the network portion presented in Fig.3 as vertical inputs. The term "free" means that no signal is transmitted on the corresponding channel and the corresponding link.

For the occupied channels, the modulation format and the digital pulse shape filter (DPSF) type used for the transmission on the corresponding link are given. The type of digital pulse shape filter is herein defined by its spectral width in percentage of the channel spacing Δλ.Futhermore, it has to be noted that the digital pulse shape filters are characterized not only by their spectral width but also by the shape of their envelope so that different pulse shape filters having the same spectral width may lead to different signal quality at destination. Thus, for sake of simplicity, in the chart of figure 3, the digital pulse shape filters are represented only by their spectral width (DPSF). However, in practice, the shape of the envelope of the digital pulse filter, for example Hanning, Hamming, Blackman-Harris or Gaussian windows may be used for the envelope of the filter, is also taken into account in the determination of the digital pulse shape filter to be applied.

The determination of the applied digital pulse shape filter is achieved based on the modulation format and the spectral spreading of the signals transmitted on the adjacent channels and will be described in more details in the following of the description.

It has to be noted that, in the present example, the different modulation schemes are QPSK and DPSK and the different modulation bitrates are 10, 40 or 100 Gb/s, however, any other modulation formats can be used within the scope of the embodiments of the present invention;

Based on the situation previously described for the network portion of figure 3, a request is received from a client for a transmission of a given amount of data from node N1 to node N6 with a given signal quality and a given data rate. Selection means of a control plane equipment then determine the most suitable modulation format to match with the requirements of the request in terms of data rates and signal quality at destination.

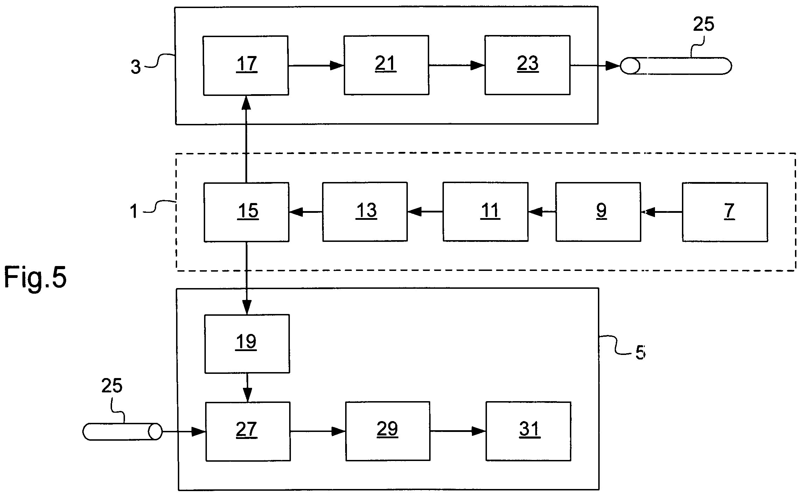

Fig.5 describes an example of structure of a control plane equipment 1, a transmitter 3 of a source node and a receiver 5 of a destination node.

The client request is received at the control plane level by reception means 7. Based on the requirements of the client request (signal quality at destination and bitrate), selection means 9 select a modulation format, in the present case, the result of the selection is a 40 Gb/s QPSK signal.

Then, planning means 11 search for a physical path and an available channel along the said path from the source node N1 to the destination node N6 of the client request.

The said planning means determine that the channel λ₃ is available along the path N1-N2-N4-N6 through links L₁₋₂, L₂₋₄ and L₄₋₆. The channel λ₃ is therefore assigned or reserved for the requested transmission.

Then, processing means 13 determine the spectral spreading of the optical signals located on the adjacent channels λ₂ and λ₄) along the path N1-N2-N4-N6.

As the processing of the client requests and the assignment of the channels are achieved at the control plane level, a control plane equipment 1 has therefore access to a mapping of the distribution of signals among the channels transmitted across the links Ljk and nodes Ni of the network. As a consequence, the said control plane equipment has access to the modulation format of the signal transmitted on a given channel across a given link and the type of the applied digital pulse shape filter if any. Based on this information, a control plane equipment 1 is therefore capable of determining the spectral spreading of the said transmitted signal.

In the present example, on the first adjacent channel corresponding to channel λ₂, there is a 10Gb/s QPSK signal with a spectral spreading of 80% of the channel spacing Δλ on the link L₁₋₂ and a 40Gb/s QPSK signal with a spectral spreading of 100% of the channel spacing Δλ on the link L₄₋₆ and on the second adjacent channel corresponding to channel λ₄, there is a 10 Gb/s DPSK signal with a spectral spreading of 70% of the channel spacing on the links L₁₋₂ and L₂₋₄ and a 100 Gb/s QPSK signal with a spectral spreading of 120% of the channel spacing on the link L₄₋₆.

Thus, based on the modulation format (if no filter is applied) or the applied filters, processing means 13 of a control plane equipment 1 determine the spectral spreading of the signals located on the adjacent channels.

Based on the modulation format selected by the selection means 9, the spectral spreading of the signals located on the adjacent channels determined by the processing means 13 and the channel spacing Δλ, determination means 15 determine the most suitable digital pulse shape filter to apply on the signal to be transmitted on the assigned channel, corresponding to channel λ₃ in the present example.

Different embodiments can be considered in the determination of the most suitable digital pulse shape filter.

According to a first embodiment, determination means 15 determine the largest spectral spreading between both adjacent channels which corresponds to the spectral spreading associated with the 100 Gb/s QPSK signal and the applied digital pulse shape filter having a spectral spreading or spectral width of 120% of the channel spacing Δλ in the present example.

Thus, knowing the largest spectral spreading (120% of Δλ) on the adjacent channels along the path and knowing the channel spacing Δλ, determination means 15 determine the available spectral width of the assigned channel, corresponding herein to 80% of Δλ, and select, among a set of predetermined digital pulse shape filters, the most suitable digital pulse shape filter according to the said available spectral width.

The set of predetermined digital pulse shape filters corresponds for example to digital pulse shape filters stored in a database of a control plane equipment 1 and sorted as a function of the modulation format corresponding to their shape and as a function of their spectral spreading.

For example, a digital pulse shape filter has a shape corresponding to a 40Gb/s QPSK signal and has a spectral spreading of 100% of the channel spacing Δλ.

Indeed, as one can notice in figure 2, the envelope of the signals for different modulation formats are different so that the shape of the applied filter has to be adapted to the said envelope. Moreover, for a given modulation format and a given spectral width, different envelope shapes of filter (Hamming, Hanning, Gaussian, Blackman-Harris...) may be applied and lead to different signal quality at destination.

Furthermore, by most suitable, it is meant herein that the digital pulse shape filter provides the best quality signal (i.e. the minimal bit error rate) at destination taking into account the interference situation. As a consequence, such a criterion is reached by choosing the digital pulse shape filter adapted to the selected modulation format and having the spectral spreading the closest to the available spectral width of the assigned channel and being smaller than the said available spectral width to avoid overlapping with adjacent channels. However, other settings, allowing for example partial overlapping of adjacent signals, may also be applied in the digital pulse shape filter selection depending on the required quality of signal at destination.

In the present case, the pulse shape filter applied to the signal transmitted on channel λ₃ is therefore a pulse shape filter adapted to a 40Gb/s QPSK signal and having a spectral spreading of 80% of the channel spacing Δλ. For the envelope shape selection, the envelope shape leading to the smallest bit error rate (BER) at destination is selected based on preliminary measurements stored, for example, in a look-up table. For example, in the present case, for a 40Gb/s QPSK signal having a spectral spreading of 80% of the channel spacing Δλ, the look-up table may indicate that a Hamming envelope shape corresponds to the envelope shape producing the smallest BER at destination. The applied digital pulse shape filter has therefore a Hamming envelope shape. In practice, an optimal digital pulse filter is selected from a collection of digital pulse filters stored in a look-up table or database, a spectral width situation being associated with a digital pulse filter providing the best signal quality at destination, said signal quality being determined based on measurements achieved previously.

Moreover, in the specific case where all the adjacent channels are "free" which means that no signals are transmitted on the adjacent channels along the path of the transmission, a digital pulse shape filter having a predetermined spectral spreading is chosen, for example, the said predetermined spectral spreading can be 70% of the channel spacing Δλ for a 10 Gb/s DPSK signal, 90% of the channel spacing Δλ for a 40 Gb/s QPSK signal and 110% of the channel spacing Δλ for a 100 Gb/s QPSK signal. Besides, a spectral spreading limit can be defined for the channels at a border of the spectral grid.

According to a second embodiment, the set of predetermined digital pulse shape filters comprises asymmetric digital pulse shape filters.

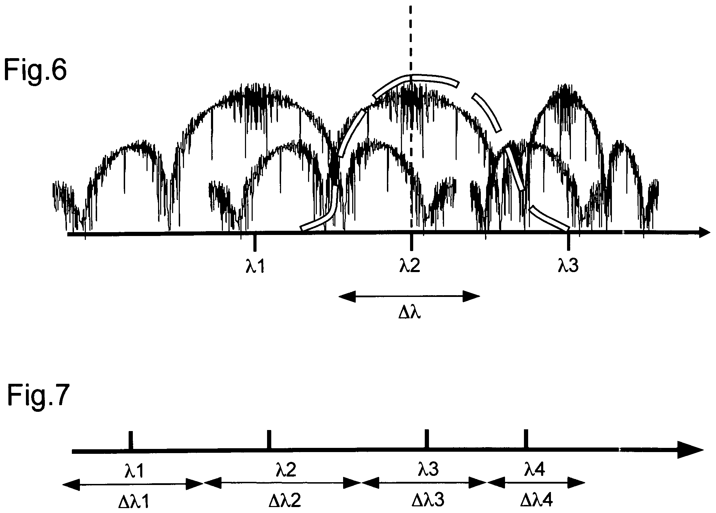

Figure 6 represents an example of asymmetric digital pulse shape filter applied on a signal located on channel λ₂ and having a smallest spectral spreading on the first side corresponding to the side toward channel λ₁ than on the second side corresponding to the side toward λ₃. Indeed, if the spectral spreading of the signals located on channel λ₃ are smaller than the spectral spreading of the signals transmitted on λ₁ along the path, the application of an asymmetric digital pulse filter allows to improve the signal quality at destination as a largest part of the signal is transmitted without increasing the overlapping with the adjacent channels.

With the previous example described in figures 3 and 4, the determination of the largest spectral spreading along the path by the determination means 15 is achieved separately on each adjacent channel, λ₂ and λ₄ in the present case.

It is thus determined that the largest spectral spreading on channel λ₂ is a 40 Gb/s QPSK signal with a spectral spreading of 100% of the channel spacing Δλ on the link L₄₋₆ and the largest spectral spreading on channel λ₄ is a 100 Gb/s QPSK signal with a spectral spreading of 120% of the channel spacing Δλ on the link L₄₋₆.

Thus, knowing the largest spectral spreadings (100% of Δλ on λ₂ and 120% of Δλ on λ₄) on the first and the second adjacent channels along the path and knowing the channel spacing Δλ, determination means 15 determine the available spectral width of the assigned channel, corresponding herein to 100% of Δλ on the first side corresponding to the first channel and 80% of Δλ on the second side corresponding to the second channel. The selection, among a set of predetermined digital pulse shape filters, of the most suitable digital pulse shape filter is then achieved according to the said available spectral widths.

As previously, the most suitable digital pulse filter corresponds to a digital pulse shape filter adapted to the modulation format of the signal and having the closest spectral spreading with respect to the available spectral widths. In the present case, such selection leads to a digital pulse shape filter with a shape corresponding to a 40Gb/s QPSK signal and with a spectral spreading of 100% of Δλ on the first side and a spectral spreading of 80% of the channel spacing Δλ on the second side. As in the first embodiment described previously, the shape of the envelope is also determined based on a stored look-up table to select the digital pulse filter producing the smallest BER at destination.

When the most suitable digital pulse shape filter is determined by the determination means 15 of a control plane equipment 1, an indication of the said determined digital pulse shape filter, for example an index of a digital pulse shape filter, is sent to control means 17 of the source node associated with a transmitter 3 of the said source node as well as the control means 19 of the destination node associated with a receiver 5 of the said destination node. Indeed, the different pulse shape digital filters and their associated index are stored in a look-up table in the control means 17, 19 of the transmitter 3 and the receiver 5 so that when the control means 17, 19 receive an information of an index, they are capable of retrieving the digital pulse shape filter associated with the received index.

On the transmitter 3 side, digital to analogical conversion means 21 are configured according to the control means 17 instructions to applied the determined digital pulse shape filter on the signal used for the modulation of an optical carrier by modulation means 23, the modulated signal being then transmitted toward a destination node through optical transmission means 25.

On the receiver 5 side, the signal transmitted through the optical transmission means 25 is received by filtering means 27 configured by the control means 19 according to the digital pulse shape filter applied by the transmitter 3 of the source node. The filtered signal is sent to analogical to digital conversion means 29 and then to digital signal processing means 31 where data transmitted by the signal are retrieved.

Furthermore, the embodiments of the present invention can also be applied in a network using a variable spectral grid, that is to say, a spectral grid, as described in figure 7, with different channel spacings Δλ₁, Δλ₂, Δλ₃, Δλ₄ between the adjacent channels. However, it is not referred to a spectral grid wherein channel spacing varies dynamically. A channel spacing can therefore be different than the channel spacing of an adjacent channel but the channel spacings are fixed over time.

Thus, with a variable spectral grid, the determination of the most suitable digital pulse shape filter takes into account the particular channel spacing Δλ₁ of the assigned channel λ₁.

Moreover, as described previously, the use of digital pulse filter allows to reduce the spectral spreading of the signal. Thus, the value of the channel spacings, in the case of a variable spectral grid, can be defined according to the spectral spreading of a digital pulse shape filter providing the desired quality of signal at destination. For example, if it is determined that a digital pulse shape filter having a spectral spreading of 25 GHz on a 40 Gb/s QPSK signal provides the desired quality of signal at destination, the channel spacing aimed at receiving 40 Gb/s QPSK signals can be defined to be 25 GHz.

Thus, the embodiments of the present invention by using digital pulse shape filters for the transmission from source to destination of signals and by selecting the most suitable filter to apply to the transmitted signal according to the largest spectral spreading of the signals transmitted on the adjacent channels along the path allow to limit the spectral occupancy of the channels leading to an improved trade-off between the quality of signal and the amount of data transmitted.

## Claims

1. Method for transmitting a signal along a path from a source node to a destination node on a channel in a wavelength division multiplexing optical network comprising a plurality of channels wherein the said method comprises the following steps:
- receiving a request for transmitting a signal from a source node to a destination node,
- selecting a path and a channel (λ), along the said path, which is available for a transmission of the signal,
- selecting a modulation format for the transmission of the signal according to the received request,
- determining the spectral spreading of the at least one signal transmitted on the at least one channel (λ) adjacent to the selected channel (λ) along the said path according to the modulation format of the said at least one signal,
- determining a digital pulse shape filter to apply to the signal to be transmitted on the selected channel according to the selected modulation format and the determined spectral spreading of the at least one signal transmitted on the at least one adjacent channel.

2. Method in accordance with claim 1 wherein the step of determination of a digital pulse shape filter comprises:
- determining the largest spectral spreading among the determined spectral spreadings,
- determining the available spectral width for the signal to be transmitted on the selected channel according to the largest determined spectral spreading,
- determining, among a set of predetermined digital pulse filters, a digital pulse shape filter adapted to the selected modulation format and having a spectral width being the closest to the determined available spectral width and smaller than the said determined available spectral width.

3. Method in accordance with claim 1 wherein the step of determination of a digital pulse shape filter comprises:
- determining the largest spectral spreading among the determined spectral spreadings on one hand on a first adjacent channel (λ) and on the other hand on a second adjacent channel (λ),
- determining a first side available spectral width according to the largest spectral spreading determined on the first adjacent channel (λ) and a second side available spectral width according to largest spectral spreading determined on the second adjacent channel (λ),
- determining, among a set of predetermined digital pulse filters comprising asymmetrical filters, a digital pulse shape filter adapted to the selected modulation format and having a spectral width being on one side, corresponding to the first side, the closest to the determined first side available spectral width and smaller than the said first side determined available spectral width and on the other side corresponding to the second side the closest to the determined second side available spectral width and smaller than the said second side determined available spectral width.

4. Method in accordance with one of the previous claims wherein the wavelength division multiplexing channels are distributed on a spectral grid having a constant spectral spacing (Δλ).

5. Method in accordance with one of the claims 1 to 3 wherein the wavelength division multiplexing channels are distributed on a spectral grid having a variable spectral spacing (Δλ).

6. Control plane equipment (1) of a wavelength division multiplexing optical network comprising a plurality of channels (λ) comprising:
- reception means (7) adapted for receiving a request of transmission of a signal from a source node to a destination node,
- selection means (9) adapted for selecting a modulation format for the transmission of the signal according to the received request,
- planning means (11) adapted for determining a path and for assigning a channel (λ) along the said path according to the received transmission request;
- processing means (13) adapted for determining spectral spreading of signals transmitted on the channels (λ) according to the modulation format of the said signals,
- determination means (15) adapted for determining a digital pulse shape filter to apply to the signal to be transmitted on the assigned channel (λ) according to the selected modulation format and the determined spectral spreading of the at least one signal transmitted on the at least one channel(λ) adjacent to the assigned channel.

7. Transmitter (3) of a wavelength division multiplexing optical network comprising a plurality of channels (λ) comprising:
- control means (17) adapted to receive, from a control plane equipment (1), an indication of a digital pulse shape filter to apply to a signal to be transmitted on the selected channel according to a selected modulation format and a determined spectral spreading of an at least one signal transmitted on an at least one adjacent channel. and to configure digital to analogical conversion means (21) to apply the said digital pulse filter;
- digital to analogical conversion means (21) comprising means to apply a digital pulse filter;

8. Transmitter (3) in accordance with claim 7 comprising also modulation means (23), the said modulation means (23) comprising:
- processing means adapted for modulating an optical carrier according to the filtered signal provided by the digital to analogical means (21);

9. Receiver (5) of a wavelength division multiplexing optical network comprising a plurality of channels (λ) comprising:
- reception means adapted to receive a signal transmitted on a selected channel through optical transmission means (25),
- control means (19) adapted to receive, from a control plane equipment (1), an indication of a digital pulse shape filter applied to the transmitted signal on the selected channel according to a selected modulation format and a determined spectral spreading of an at least one signal transmitted on an at least one adjacent channel, and to determine a filtering function to apply to the received signal according to the digital pulse shape filter applied to the signal transmitted and to transmit the said determined filtering function to filtering means (27);
- filtering means (27) adapted to receive and apply a determined filtering function on the received signal.

10. Receiver (5) in accordance with claim 9 comprising also:
- analogical to digital conversion means (29) adapted to convert a filtered analogical signal into a numerical signal,
- digital signal processing means (31) adapted to receive and process a numerical signal transmitted by the analogical to digital conversion means (29).

## Patentansprüche

1. Verfahren zum Übertragen eines Signals entlang eines Pfads von einem Quellknoten auf einen Zielknoten auf einem Kanal in einem optischen Wellenlängen-Multiplex-Netzwerk, umfassend eine Vielzahl von Kanälen, wobei besagtes Verfahren die folgenden Schritte umfasst:
- Empfangen einer Anforderung zum Übertragen eines Signals von einem Quellknoten auf einen Zielknoten,
- Auswählen eines Pfads und eines Kanals (λ) entlang besagten Pfads, der verfügbar ist für eine Übertragung des Signals,
- Auswählen eines Modulationsformats für die Übertragung des Signals gemäß der empfangenen Anforderung,
- Bestimmen der spektralen Verteilung des mindestens einen Signals, das auf dem mindestens einen Kanal (λ) übertragen worden ist, der dem ausgewählten Kanal (λ) benachbart ist, entlang besagten Pfads gemäß dem Modulationsformat von besagtem mindestens einen Signal,
- Bestimmen eines digitalen Impulsformfilters zum Anwenden auf das zu übertragende Signal auf dem ausgewählten Kanal gemäß dem ausgewählten Modulationsformat und der bestimmten spektralen Verteilung des mindestens einen Signals, das über den mindestens einen benachbarten Kanal übertragen wird.

2. Verfahren nach Anspruch 1, wobei der Schritt des Bestimmens eines digitalen Impulsformfilters umfasst:
- Bestimmen der größten spektralen Verteilung der bestimmten spektralen Verteilungen,
- Bestimmen der verfügbaren spektralen Breite für das zu übertragende Signal auf dem ausgewählten Kanal gemäß der größten bestimmten spektralen Verteilung,
- Bestimmen, aus einem Satz von vorbestimmten digitalen Impulsfiltern, eines digitalen Impulsformfilters, der ausgelegt für das ausgewählte Modulationsformat und eine spektrale Breite aufweist, die der bestimmten verfügbaren spektralen Breite am nächsten kommt und kleiner ist als besagte bestimmte verfügbare spektrale Breite.

3. Verfahren nach Anspruch 1, wobei der Schritt des Bestimmens eines digitalen Impulsformfilters umfasst:
- Bestimmen der größten spektralen Verteilung der bestimmten spektralen Verteilungen, einerseits auf einem ersten benachbarten Kanal (λ) und andererseits auf einem zweiten benachbarten Kanal (λ),
- Bestimmen einer auf einer Seite verfügbaren spektralen Breite gemäß der größten auf dem ersten benachbarten Kanal (λ) bestimmten spektralen Verteilung und einer auf einer zweiten Seite verfügbaren spektralen Breite gemäß der größten auf dem zweiten benachbarten Kanal (λ) bestimmten spektralen Breite,
- Bestimmen, aus dem Satz von vorbestimmten digitalen Impulsfiltern, umfassend asymmetrische Filter, eines digitalen Impulsformfilters, der ausgelegt für das ausgewählte Modulationsformat und eine spektrale Breite auf einer Seite aufweist, die der ersten Seite entspricht, die am nächsten zur verfügbaren auf der ersten Seite bestimmten spektralen Breite ist und kleiner als die verfügbare, auf besagter ersten Seite bestimmte spektrale Breite ist, und auf der anderen Seite, entsprechend der zweiten Seite, die am nächsten zur verfügbaren, auf der zweiten Seite bestimmte spektrale Breite aufweist, die kleiner als die verfügbare, auf der zweiten Seite bestimmten spektralen Breite ist.

4. Verfahren nach einem beliebigen der vorhergehenden Ansprüche, wobei die Wellenlängen-Multiplex-Kanäle auf einem spektralen Gitter mit konstantem spektralen Abstand (Δλ) verteilt sind.

5. Verfahren nach einem beliebigen der Ansprüche 1 bis 3, wobei die Wellenlängen-Multiplex-Kanäle auf einem spektralen Gitter mit variablem spektralen Abstand (Δλ) verteilt sind.

6. Steuerebenengerät (1) eines optischen Wellenlängen-Multiplex-Netzwerks, umfassend eine Vielzahl von Kanälen (λ), umfassend:
- ein Empfangsmittel (7), ausgelegt zum Empfangen einer Anforderung zum Übertragen eines Signals von einem Quellknoten auf einen Zielknoten,
- ein Auswahlmittel (9), das ausgelegt ist zum Auswählen eines Modulationsformats für die Übertragung des Signals gemäß der empfangenen Anforderung,
- ein Planungsmittel (11), das ausgelegt ist zum Bestimmen eines Pfades und zum Zuweisen eines Kanals (λ) entlang des besagten Pfads gemäß der empfangenen Übertragungsanforderung;
- ein Bearbeitungsmittel (13), das ausgelegt ist zum Bestimmen der spektralen Verteilung von Signalen, die auf den Kanälen (λ) gesendet worden sind gemäß dem Modulationsformat besagter Signale;
- ein Bestimmungsmittel (15), das ausgelegt ist für das Bestimmen eines digitalen Impulsformfilters zum Anwenden auf das zu übertragende Signal auf dem zugewiesenen Kanal (λ) gemäß dem ausgewählten Modulationsformat und der bestimmten spektralen Verteilung des mindestens einen Signals, das über den mindestens einen Kanal (λ) übertragen wird, der dem zugewiesenen Kanal benachbart ist.

7. Sender (3) eines optischen Wellenlängen-Multiplex-Netzwerks, umfassend eine Vielzahl von Kanälen (λ), umfassend:
- ein Steuermittel (17), das ausgelegt ist zum Empfangen, von einem Steuerebenengerät (1), einer Anzeige eines digitalen Impulsformfilters zum Anwenden auf ein Signal, das auf dem ausgewählten Kanal gesendet werden muss gemäß einem ausgewählten Modulationsformat und einer bestimmten spektralen Verteilung von mindestens einem Signal, das auf mindestens einem benachbarten Kanal übertragen wurde, und zum Konfigurieren eines Digital-Analog-Wandlermittels (21) zum Anwenden auf besagten digitalen Impulsfilter;
- ein Digital-Analog-Wandlermittel (21), umfassend ein Mittel zum Anwenden auf einen digitalen Impulsfilter.

8. Sender (3) nach Anspruch 7, ebenfalls umfassend ein Modulationsmittel (23), wobei besagtes Modulationsmittel (23) umfasst:
- ein Bearbeitungsmittel, das ausgelegt ist zum Modulieren eines optischen Trägers gemäß dem gefilterten Signal, das von dem Digital-Analog-Wandlermittel (21) bereitgestellt wird;

9. Empfänger (5) von einem optischen Wellenlängen-Multiplex-Netzwerk, umfassend eine Vielzahl von Kanälen (λ), umfassend:
- ein Empfangsmittel, ausgelegt zum Empfangen eines Signals, das auf einem ausgewählten Kanal übertragen wird, mittels eines optischen Übertragungsmittels (25),
- ein Steuermittel (19), das ausgelegt ist zum Empfangen von einem Steuerebenengerät (1) einer Anzeige eines digitalen Impulsformfilters, der auf das gesendete Signal angewendet wird gemäß einem ausgewählten Modulationsformat und einer bestimmten spektralen Verteilung von mindestens einem Signal, das auf mindestens einem benachbarten Kanal übertragen worden ist, und zum Bestimmen einer Filterfunktion, die auf das empfangene Signal angewendet wird gemäß dem digitalen Impulsformfilter, der auf das gesendete Signal angewendet wird, und zum Übertragen besagter bestimmter Filterfunktion auf das Filtermittel (27);
- ein Filtermittel (27), ausgelegt zum Empfangen und Anwenden einer bestimmten Filterfunktion auf das empfangene Signal.

10. Empfänger (5) nach Anspruch 9, ebenfalls umfassend:
- ein Analog-Digital-Wandlermittel (29), ausgelegt zum Umwandeln eines gefilterten analogen Signals in ein numerisches Signal,
- ein digitales Signalbearbeitungsmittel (31), ausgelegt zum Empfangen und Bearbeiten eines numerischen Signals, das von dem Analog-Digital-Wandlermittel (29) gesendet wird.

## Revendications

1. Procédé de transmission de signal le long d'un chemin depuis un noeud source vers un noeud de destination sur un canal dans un réseau optique à multiplexage par répartition en longueur d'onde comprenant une pluralité de canaux, ledit procédé comprenant les étapes suivantes :
- recevoir une demande de transmission d'un signal depuis un noeud source vers un noeud de destination,
- sélectionner un chemin et un canal (À), le long dudit chemin, qui est disponible pour la transmission du signal,
- sélectionner un format de modulation pour la transmission du signal selon la demande reçue,
- déterminer l'étalement spectral de l'au moins un signal transmis sur l'au moins un canal (λ) adjacent au canal sélectionné (λ) le long dudit chemin selon le format de modulation dudit au moins un signal,
- déterminer un filtre de forme d'impulsion numérique à appliquer au signal à transmettre sur le canal sélectionné selon le format de modulation sélectionné et l'étalement spectral déterminé de l'au moins un signal transmis sur l'au moins un canal adjacent.

2. Procédé selon la revendication 1 dans lequel l'étape de détermination d'un filtre de forme d'impulsion numérique comprend les étapes suivantes :
- déterminer l'étalement spectral le plus large parmi les étalements spectraux déterminés,
- déterminer la largeur spectrale disponible pour le signal à transmettre sur le canal sélectionné selon l'étalement spectral le plus large déterminé,
- déterminer, parmi un ensemble de filtres d'impulsion numérique prédéterminés, un filtre de forme d'impulsion numérique adapté au format de modulation sélectionné et dont la largeur spectrale est la plus proche de la largeur spectrale disponible déterminée et inférieure à ladite largeur spectrale disponible déterminée.

3. Procédé selon la revendication 1 dans lequel l'étape de détermination d'un filtre de forme d'impulsion numérique comprend les étapes suivantes :
- déterminer l'étalement spectral le plus large parmi les étalements spectraux déterminés d'une part sur un premier canal adjacent (À) et d'autre part sur un deuxième canal adjacent (À),
- déterminer une largeur spectrale disponible d'un premier côté selon l'étalement spectral le plus large déterminé sur le premier canal adjacent (λ) et une largeur spectrale disponible d'un deuxième côté selon l'étalement spectral le plus large déterminé sur le deuxième canal adjacent (λ),
- déterminer, parmi un ensemble de filtres d'impulsion numérique prédéterminés comprenant des filtres asymétriques, un filtre de forme d'impulsion numérique adapté au format de modulation sélectionné et dont la largeur spectrale est d'un côté, correspondant au premier côté, la plus proche de la largeur spectrale disponible déterminée du premier côté et inférieure à ladite largeur spectrale disponible déterminée du premier côté et de l'autre côté, correspondant au deuxième côté, la plus proche de la largeur spectrale disponible déterminée du deuxième côté et inférieure à ladite largeur spectrale disponible déterminée du deuxième côté.

4. Procédé selon l'une des revendications précédentes dans lequel les canaux de multiplexage par répartition en longueur d'onde sont répartis sur une grille spectrale dont l'espacement spectral (Δλ) est constant.

5. Procédé selon l'une des revendications 1 à 3 dans lequel les canaux de multiplexage par répartition en longueur d'onde sont répartis sur une grille spectrale dont l'espacement spectral (Δλ) est variable.

6. Équipement du plan de commande (1) d'un réseau optique à multiplexage par répartition en longueur d'onde comprenant une pluralité de canaux (λ) comportant :
- des moyens de réception (7) adaptés pour recevoir une demande de transmission d'un signal depuis un noeud source vers un noeud de destination,
- des moyens de sélection (9) adaptés pour sélectionner un format de modulation pour la transmission du signal selon la demande reçue,
- des moyens de planification (11) adaptés pour déterminer un chemin et pour allouer un canal (λ) le long dudit chemin selon la demande de transmission reçue,
- des moyens de traitement (13) adaptés pour déterminer l'étalement spectral des signaux transmis sur les canaux (λ) selon le format de modulation desdits signaux,
- des moyens de détermination (15) adaptés pour déterminer un filtre de forme d'impulsion numérique à appliquer au signal à transmettre sur le canal alloué (λ) selon le format de modulation sélectionné et l'étalement spectral déterminé de l'au moins un signal transmis sur l'au moins un canal (λ) adjacent au canal alloué.

7. Émetteur (3) d'un réseau optique à multiplexage par répartition en longueur d'onde comprenant une pluralité de canaux (À) comportant :
- des moyens de commande (17) adaptés pour recevoir, en provenance d'un équipement du plan de commande (1), une indication d'un filtre de forme d'impulsion numérique à appliquer à un signal à transmettre sur le canal sélectionné selon un format de modulation sélectionné et un étalement spectral déterminé d'au moins un signal transmis sur au moins un canal adjacent, et pour configurer des moyens de conversion numérique-analogique (21) pour appliquer ledit filtre d'impulsion numérique,
- des moyens de conversion numérique-analogique (21) comprenant des moyens pour appliquer un filtre d'impulsion numérique.

8. Émetteur (3) selon la revendication 7 comprenant en outre des moyens de modulation (23), lesdits moyens de modulation (23) comprenant :
- des moyens de traitement adaptés pour moduler une porteuse optique selon le signal filtré fourni par les moyens de conversion numérique-analogique (21).

9. Récepteur (5) d'un réseau optique à multiplexage par répartition en longueur d'onde comprenant une pluralité de canaux (λ) comportant :
- des moyens de réception adaptés pour recevoir un signal transmis sur un canal sélectionné via des moyens de transmission optique (25),
- des moyens de commande (19) adaptés pour recevoir, en provenance d'un équipement du plan de commande (1), une indication d'un filtre de forme d'impulsion numérique appliqué au signal transmis sur le canal sélectionné selon un format de modulation sélectionné et un étalement spectral déterminé d'au moins un signal transmis sur au moins un canal adjacent, et pour déterminer une fonction de filtrage à appliquer au signal reçu selon le filtre de forme d'impulsion numérique appliqué au signal transmis et pour transmettre ladite fonction de filtrage déterminée aux moyens de filtrage (27),
- des moyens de filtrage (27) adaptés pour recevoir une fonction de filtrage déterminée et l'appliquer au signal reçu.

10. Récepteur (5) selon la revendication 9 comprenant en outre :
- des moyens de conversion analogique-numérique (29) adaptés pour convertir un signal analogique filtré en signal numérique,
- des moyens de traitement de signal numérique (31) adaptés pour recevoir et traiter un signal numérique transmis par les moyens de conversion analogique-numérique (29).
